# NEW EUROPEAN PATENT SPECIFICATION

(11) **EP 0 286 150 B2**
(45) Date of publication and mention of the opposition decision: **31.01.1996**
(45) Mention of the grant of the patent: 20.02.1991
(21) Application number: 88200432.8
(22) Date of filing: 08.03.1988
(51) Int. Cl.: F16C 33/78, F16J 15/32, B60B 27/00

(54) **Seal for the hubs of vehicle wheels**
Abdichtung für Fahrzeugradnaben
Etanchéité pour moyeux de roues de véhicule

(30) Priority: 10.04.1987 IT 5322487 U
(43) Date of publication of application: 12.10.1988
(73) Proprietor: RIV-SKF OFFICINE DI VILLAR PEROSA S.p.A, I-10123 Torino (IT)
(72) Inventor: Colanzi, Franco, I-10100 Torino (IT); Vignotto, Angelo, I-10100 Torino (IT)
(74) Representative: Lotti, Giorgio

(56) References cited:
- DE-A- 2 540 381
- DE-A- 2 841 806
- DE-C- 1 042 308
- FR-A- 2 249 573
- GB-A- 2 018 914
- GB-A- 2 071 788
- US-A- 4 392 695
- US-A- 4 501 431
- US-A- 4 643 436

## Description

The invention refers to a seal for bearings of the hubs of vehicle wheels as set out in the first part of claim 1.

Recent generations of bearings applied to the hubs of the wheels offer very good operating performance, but these types are rather expensive so it is opportune to equip them with seals that ensure a sealing as safe as possible against infiltration of external agents like water, dirt, mud, to which the elements on which bearings are assembled are constantly subjected.

Such seals, at the moment, though having at least two sealing lips, are designed so that such lips become easily worn-out and/or do not ensure a sufficient sealing in every operating condition of the bearing as the lips are not always correctly oriented and are not pressing on the surface of the element on which the sealing must be exerted (cf e.g. GB-A-2018914 or FR-A-2249573, respectively).

DE-A-2841806 discloses a sealing device for bearing assemblies wherein two sealing lips bifurcate taking a Y-shaped arrangement in pressing against a surface of the bearing.

Purpose of the invention is to overcome the above mentioned inconveniences and to propose a seal performing a better sealing both of static type (on the outer race) and of dynamic type (on the inner race), having such an orientation of the relating lips to improve the said sealing and to elongate the life of the seal and consequently of the same bearing also during very heavy operating conditions.

For these and other purposes which will be better appreciated as the description follows, the invention proposes to provide a seal for bearings of the hubs of vehicle wheels comprising the features set out in the second part of claim 1.

A description of the seal according to the invention will now follow.

In a bearing fcr the hub of vehicle wheel which comprises a generally rotating inner race, a generally immovable outer race and two ball crowns retained by cages, the seal according to the invention is being assembled interposed between such elements.

The above elements of the bearing are not described in detail as these are not the subject of the invention; their shapes and dimensions are merely examples, as they can assume any other configuration according to the utilisation without modifying the purposes and the advantages of the invention.

The seal has a central body rigidly connected to a metal insert driven on the outer race. From the seal an appendix is extending which, after the assembly, is being compressed by pressing on the outer race, so as to ensure a good static seal thus avoiding that external agents that may infiltrate between the race and the insert, reaching the bearing.

A dirt guard lip and three sealing lips are extending from the central body.

The outer lip of said sealing lips is lengthened and flexible to allow a good sealing against the surface of the inner race of the bearing also in case misalignments should take place during assembly or during operation.

Between outer lip and main lip of said sealing lips, a grease-containing chamber is located; this has the task of keeping the main lip well lubricated.

The inner of said three sealing lips is designed so that it skims the surface of the inner race of the bearing during assembly and it has a particular configuration that enables the grease contained in the space between bearing and seal to follow the rubber and to deposit itself towards the outside of the bearing.

The dirt guard lip of the seal performs a labyrinth seal with the surface of the inner race of the bearing and makes a sufficiently wide chamber to enable the containment and the expelling of the external polluting agents.

The surface of the inner race of the bearing on which the sealing lips slide is toroidally shaped to exploit the centrifugal effect which develops during the rotation of the inner race, to improve the sealing; such shape allows an improvement of the structural resistance of such race.

## Claims

1. A seal for vehicle wheel hub bearings consisting of a rotating inner race and a stationary outer race; the seal comprising:
- a central body rigidly connected to a metal insert driven onto the outer race of the bearing;
- an appendix extending from the body of the seal and being compressed onto the outer race of the bearing to form static seal thereon;
- a dirt guard lip forming labyrinth seal with a toroidally shaped surface of the inner race of the bearing;
- two sealing lips, defined as outer and main lip, extending from said central body and performing dynamic seal with said toroidally shaped surface of the inner race of the bearing and forming a grease containing chamber with it; said outer lip being oriented towards the outside of the bearing to exploit the centrifugal effect deriving during operation from the rotation of the toroidally shaped surface of the inner race;
characterised in that said main lip is also oriented towards the outside of the bearing, like said outer lip, to exploit the same centrifugal effect; a third innermost sealing lip, extending from said central body, being designed so that it skims said toroidally shaped surface during operation to enable the grease contained in the space between the bearing and the seal to flow towards the outside of the bearing.

2. A seal according to claim 1, characterised in that said outer lip is lengthened and flexible to allow sealing against said toroidally shaped surface in case of misalignment of the bearing.

## Revendications

1. Joint d'étanchéité pour paliers à roulement de moyeux de roues de véhicules automobiles, constitués d'une bague intérieure tournante et d'une bague extérieure immobile, ledit joint comprenant :
- un corps central relié rigidement à un insert métallique monté sur la bague extérieure du palier ;
- un appendice s'étendant à partir du corps du joint et étant comprimé contre la bague extérieure du palier de roulement pour former avec elle un joint d'étanchéité statique ;
- une lèvre de protection contre la poussière formant un joint d'étanchéité du type à labyrinthe avec une surface à configuration toroïdale de la bague intérieure du palier ;
- deux lèvres d'étanchéité, désignées comme lèvre extérieure et lèvre principale, s'étendant à partir du corps central, réalisant une étanchéité dynamique vis-à-vis de ladite surface à configuration toroïdale de la bague intérieure du palier, et délimitant avec cette surface une chambre contenant de la graisse ; ladite lèvre extérieure étant orientée en direction de l'extérieur du palier pour exploiter l'effet de la force centrifuge dérivant, pendant le fonctionnement, de la rotation de la surface à configuration toroïdale de la bague intérieure ;
caractérisé en ce que la lèvre principale est également orientée en direction de l'extérieur du palier, comme la lèvre extérieure, pour exploiter le même effet de la force centrifuge ; une troisième lèvre d'étanchéité, qui est la plus à l'intérieur, s'étendant à partir du corps central et étant agencée pour effleurer ladite surface à configuration toroïdale pendant le fonctionnement, de façon à permettre à la graisse contenue dans l'espace délimité entre le palier et le joint d'étanchéité de s'écouler en direction de l'extérieur du palier.

2. Joint selon la revendication 1, caractérisé en ce que la lèvre extérieure est allongée et flexible de façon à permettre un contact d'étanchéité avec la surface à configuration toroïdale en cas de défaut d'alignement du palier.

## Patentansprüche

1. Dichtung für die Lager der Naben von Fahrzeugrädern mit einem drehenden Innenring und einem festen Außenring, umfassend
- einen Zentralkörper, welcher starr mit einem auf dem Außenring angebrachten Metalleinsatz verbunden ist;
- einen Fortsatz, welcher sich vom Dichtungskörper erstreckt und auf den Außenring der Dichtung aufgedrückt wird, um auf diesem eine statische Dichtung zu bilden,
- eine Schmutzschutzlippe, welche mit einer toroidförmigen Fläche des Innenrings des Lagers eine Labyrithdichtung bildet,
- zwei als Außen- und Hauptdichtlippe definierte Dichtlippen, welche sich vom Zentralkörper erstrecken, mit der toroidförmigen Fläche des Innenrings des Lagers eine dynamische Dichtung bilden und mit ihm eine Kammer für Fett bilden; wobei die Außenlippe in Richtung auf die Außenseite des Lagers orientiert ist, um die Zentrifugalwirkung zu nutzen, welche sich während des Betriebs aus der Drehung der toroidförmigen Fläche des Innenrings ergibt;
dadurch gekennzeichnet,
daß die Hauptlippe analog zur Außenlipppe in Richtung auf die Außenseite des Lagers orientiert ist, um dieselbe Zentrifugalwirkung zu nutzen; daß eine dritte, vom Zentralkörper sich erstreckende innerste Dichtlippe so gestaltet ist, daß sie während des Betriebs die toroidförmige Fläche auf eine Weise streift, daß das im Raum zwischen Lager und Dichtung befindliche Fett in Richtung auf die Außenseite des Lagers fließen kann.

2. Dichtung nach Anspruch 1,
dadurch gekennzeichnet,
daß die Außenlippe verlängert und flexibel ist, um im Falle einer nicht einwandfreien Ausrichtung des Lagers eine Abdichtung gegen die toroidförmige Fläche zu bilden.
